# EUROPEAN PATENT APPLICATION

(11) **EP 4 759 608 A1**
(43) Date of publication of application: **17.06.2026**
(21) Application number: 24220045.9
(22) Date of filing: 16.12.2024
(51) Int. Cl.: B60L 3/00, B60L 3/04

(54) **SYTEM AND METHOD FOR HANDLING CHARGING OF A VEHICLE**

(71) Applicant: Volvo Truck Corporation, 405 08 Göteborg (SE)
(72) Inventor: Atefi, Reza, 412 54 Göteborg (SE); Parastar, Amir, 417 61 Göteborg (SE); Shukla, Tanmay, 433 36 Partille (SE); Berg-Palmqvist, Anders, 633 52 Eskilstuna (SE); Idichandy, Jeril, 417 47 Göteborg (SE)
(74) Representative: Valea AB

(57) **Abstract**

This disclosure relates to a computer system (800) for handling charging of a vehicle (100). The computer system (800) comprising processing circuitry (802) configured to:
determine an intent to charge the vehicle (100) at a current charging station (215):
obtain information indicating a capacitance of a traction system (203);
determine that a charging fault can occur due to the capacitance being above a capacitance threshold;
determine an amount of reduction in the capacitance of the traction system (203) that is needed for it to become below the capacitance threshold;
determine n high power loads (210_n) that can be disconnected from the traction system (203) without interrupting the charging of the vehicle (100) at the current charging station (215);
initiate disconnection of at least one of the n high power loads (210_n); and to
initiate charging of the vehicle (100) at the current charging station (215) after the disconnection has been completed.

## Description

### TECHNICAL FIELD

The disclosure relates generally to a computer system, a vehicle, a computer-implemented method, a computer program product and a non-transitory computer-readable storage medium. In particular aspects, the disclosure relates to handling charging of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For an at least partly electrically driven vehicle, it is important that the charging functions without problems or failure. The high capacitance, e.g. the Y-capacitance, between the vehicle system and the charging station is an example of a parameter which may cause charging failure.

Hence, there is a strive to improve success rate for charging of vehicles.

### SUMMARY

According to a first aspect of the disclosure, a computer system for handling charging of a vehicle is provided. At least one high power load is connected to the vehicle. The computer system comprising processing circuitry configured to:
- determine an intent to charge the vehicle at a current charging station:
- triggered by the detected intent to charge, obtain information indicating a capacitance of a traction system comprised in the vehicle;
- determine that a charging fault can occur due to the measured capacitance being above a capacitance threshold;
- determine an amount of reduction in the capacitance of the traction system that is needed for it to become below the capacitance threshold;
- identify n high power loads that can be disconnected from the traction system without interrupting the charging of the vehicle at the current charging station, where n is a positive integer;
- initiate disconnection of at least one of the n high power loads; and
- initiate charging of the vehicle at the current charging station after the disconnection has been completed.

The first aspect of the disclosure may seek to improve handling of charging of a vehicle. A technical benefit may include that handling of charging of a vehicle is improved. When the charging of the vehicle is initiated after disconnection of at least one of the n high power loads has been completed, the capacitance between the vehicle and the charging station has been reduced. The capacitance may be a Y-capacitance. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Optionally in some examples, including in at least one preferred example, the processing circuitry may be further configured to:
- obtain analysis data related to at least one of: the current charging station, the vehicle and success of the charging of the vehicle after the disconnection; and to
- determine, based on the analysis data, a similar or same charging fault that can occur for a future charging session of the vehicle at the current charging station.

A technical benefit may include that handling of charging of a vehicle is improved. The possibility to determine a similar or same charging fault for a future charging session may enable proactive countermeasures to be taken in order to prevent or remove the similar or same charging fault from occurring in the future. This also increases cost efficiency. Route interruptions may be minimized or avoided, based on the knowledge that a similar or same charging station can occur for a future charging session. The possibility to determine similar or same charging fault for a future charging session may improve safety in a charging procedure since fault scenarios may be avoided.

Optionally in some examples, including in at least one preferred example, the processing circuitry may be further configured to:
- determine the future charging session of the vehicle based on the determined similar or same charging fault, wherein the future charging session comprises the current charging station or at least one other charging station.

A technical benefit may include that handling of charging of a vehicle is improved. The planning of the future charging session may take the possibility of a similar or same failure may occur, and thereby avoid a charging station where such failure may occur. This also increases cost efficiency. Route interruptions may be minimized or avoided, based on the knowledge that a similar or same charging station can occur for a future charging session. The user experience of the charging is improved when the risk for failure during charging is reduced or removed.

Optionally in some examples, including in at least one preferred example, the processing circuitry may be further configured to:
- determine, from a charging station group, at least one other charging station having a risk for charging fault that is at or above a risk threshold to not be a candidate for a future charging session of the vehicle, wherein the at least one other charging station is determined based on information indicating the similar or same charging fault for the future charging session of the vehicle at the current charging station.

A technical benefit may include that handling of charging of a vehicle is improved. The result of the determining of the at least one other charging station with a risk for charging fault that is at or above a risk threshold, i.e. a high risk for charging fault, may be avoided in future planning of charging. This increases the reliability as the charging is most likely to be conducted as expected, and without delays or failures. The risk for unexpected delay is reduced when the charging station with high risk for charging failure may be avoided. The user will experience less trouble during the charging, i.e. the user satisfaction is improved. Preventing a selection of a charging station with high risk of failure reduces unnecessary travel of the vehicle to a charging station with high risk for failure, i.e. energy consumption and emissions are reduced.

Optionally in some examples, including in at least one preferred example, the processing circuitry may be further configured to:
- determine to not use at least one of the determined at least one other charging station for the future charging session of the vehicle.

A technical benefit may include that handling of charging of a vehicle is improved. The result of the determining of the at least one other charging station with a risk for charging fault that is at or above a risk threshold, i.e. a high risk for charging fault, may be avoided in future planning of charging. This increases the reliability as the charging is most likely to be conducted as expected, and without delays or failures. The risk for unexpected delay is reduced when the charging station with high risk for charging failure may be avoided. The user will experience less trouble during the charging, i.e. the user satisfaction is improved. Preventing a selection of a charging station with high risk of failure reduces unnecessary travel of the vehicle to a charging station with high risk for failure, i.e. energy consumption and emissions are reduced.

Optionally in some examples, including in at least one preferred example, the processing circuitry may be further configured to:
- determine an alternative charging station from the charging station group to be used instead of the determined at least one other charging station in the future charging session of the vehicle, wherein the alternative charging station has a risk for charging fault that is below the risk threshold.

A technical benefit may include that handling of charging of a vehicle is improved. The result of the determining of the alternative charging station with a risk for charging fault that is below the risk threshold, i.e. a low risk for charging fault, may be selected instead of the current charging station or the at least one other charging station having a high risk for charging fault. This increases the reliability as the charging is most likely to be conducted as expected, and without delays or failures. The risk for unexpected delay is reduced when the alternative charging station with low risk for charging failure is selected. The user will experience less trouble during the charging, i.e. the user satisfaction is improved. The possibility to charge the vehicle at the alternative charging station with low risk for failure prevents unnecessary travel of the vehicle to at least one other charging stations with high risk for failure, i.e. energy consumption and emissions are reduced.

Optionally in some examples, including in at least one preferred example, the processing circuitry may be further configured to:
- initiate guidance of the vehicle to the alternative charging station.

A technical benefit may include that handling of charging of a vehicle is improved. Information may be provided to the user of the vehicle so that it may drive the vehicle towards the other charging station. The route of the vehicle may be automatically changed, for example in a navigation system of the vehicle or a mobile phone or similar accessible by the user, so that it automatically drives to the alternative charging station. The guidance to the selected at least one other charging station may simplify the navigation for the user, and the user may know that it may reach the alternative charging station before running out of charge. The guidance may reduce energy consumption and optimize the route to the charging station, for example by guiding towards the closest available or most efficient alternative charging station.

Optionally in some examples, including in at least one preferred example, charging of the vehicle at the current charging station may be enabled when the capacitance is below the capacitance threshold.

A technical benefit may include that handling of charging of a vehicle is improved. When the charging of the vehicle is initiated after disconnection of at least one of the n high power loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Optionally in some examples, including in at least one preferred example, initiating the disconnection of at least one of the n high power loads may comprise disconnection information provided to a switch associated with the at least one high power load. A technical benefit may include that handling of charging of a vehicle is improved. Using a switch may be an easy way of disconnecting the at least one high power load since a switch is easy to implement and operate, they are reliable and ensures a clear on or off state. There may be one switch per high power load, or one switch associated with two or more high power loads, i.e. a switch enables modularity where at least one HV load may be independently disconnected with respect to other high power loads, or where two or more HV loads may be disconnected at the same time.

According to a second aspect of the disclosure, a vehicle comprising the computer system of the first aspect is provided.

The second aspect of the disclosure may seek to improve handling of charging of a vehicle. A technical benefit may include that handling of charging of a vehicle is improved. When the charging of the vehicle is initiated after disconnection of at least one of the n high power loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Technical benefits of the second aspect of the disclosure may correspond to the technical benefits of the first aspect of the disclosure. Further, all examples of the first aspect are applicable to and combinable with all examples of the second aspect, and vice versa.

According to a third aspect of the disclosure, a computer-implemented method for handling charging of a vehicle is provided. At least one high power load is connected to the vehicle. The method comprising:
- determining, by processing circuitry of a computer system, an intent to charge the vehicle at a current charging station:
- triggered by the detected intent to charge, obtaining, by the processing circuitry, information indicating a capacitance of a traction system comprised in the vehicle;
- determining, by the processing circuitry, that a charging fault can occur due to the capacitance being above a capacitance threshold;
- determining, by the processing circuitry, an amount of reduction in the capacitance of the traction system that is needed for it to become below the capacitance threshold;
- determining, by the processing circuitry, n high power loads that can be disconnected from the traction system without interrupting the charging of the vehicle at the current charging station, where n is a positive integer;
- initiating, by the processing circuitry, disconnection of at least one of the n high power loads; and
- initiating, by the processing circuitry, charging of the vehicle at the current charging station after the disconnection has been completed.

Optionally in some examples, including in at least one preferred example, the method may further comprise:
- obtaining analysis data related to at least one of: the current charging station, the vehicle and success of the charging of the vehicle after the disconnection; and
- determining, based on the analysis data, a similar or same charging fault that can occur for a future charging session of the vehicle at the current charging station.

A technical benefit may include that handling of charging of a vehicle is improved. The possibility to determine a similar or same charging fault for a future charging session may enable proactive countermeasures to be taken in order to prevent or remove the similar or same charging fault from occurring in the future. This also increases cost efficiency. Route interruptions may be minimized or avoided, based on the knowledge that a similar or same charging station can occur for a future charging session. The possibility to determine similar or same charging fault for a future charging session may improve safety in a charging procedure since fault scenarios may be avoided.

The third aspect of the disclosure may seek to improve handling of charging of a vehicle. A technical benefit may include that handling of charging of a vehicle is improved. When the charging of the vehicle is initiated after disconnection of at least one of the n high power loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Technical benefits of the third aspect of the disclosure may correspond to the technical benefits of the first aspect and the second aspect of the disclosure. Further, all examples of the first and second aspects are applicable to and combinable with all examples of the third aspect, and vice versa.

According to a fourth aspect of the disclosure, a computer program product is provided. The computer program product comprises program code for performing, when executed by a processing circuitry, the method of the third aspect.

The fourth aspect of the disclosure may seek to improve handling of charging of a vehicle. A technical benefit may include that handling of charging of a vehicle is improved. When the charging of the vehicle is initiated after disconnection of at least one of the n high power loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Technical benefits of the fourth aspect of the disclosure may correspond to the technical benefits of the first aspect, the second aspect and the third aspect of the disclosure. Further, all examples of the first, second and third aspects are applicable to and combinable with all examples of the fourth aspect, and vice versa.

According to a fifth aspect of the disclosure, non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to improve handling of charging of a vehicle. A technical benefit may include that handling of charging of a vehicle is improved. When the charging of the vehicle is initiated after disconnection of at least one of the n high power loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety.

Technical benefits of the fifth aspect of the disclosure may correspond to the technical benefits of the first aspect, the second aspect, the third aspect and the fourth aspect of the disclosure. Further, all examples of the first, second, third and fourth aspects are applicable to and combinable with all examples of the fifth aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle, according to an example.
**FIG. 2** is an exemplary drawing illustrating a vehicle, according to an example.
**FIG. 3** is a flow chart of a method, according to an example.
**FIG. 4** is an exemplary drawing illustrating a charging station group, according to an example.
**FIG. 5** is a flow chart of a method, according to an example.
**FIG. 6** is another view of **FIG. 1****,** according to an example.
**FIG. 7** is a flow chart of a method, according to an example.
FIG. 8 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

For an at least partly electrically driven vehicle, it is important that the charging functions without problems or failure. The high capacitance between the vehicle system and the charging station is an example of a parameter which may cause charging failure. The capacitance may be Y-capacitance. Loads comprised in or connected to the traction system of a vehicle can contribute to increased capacitance. The loads may be galvanically connected to the traction system. If it is not possible to reduce the capacitance for individual loads and to keep the total sum withing the standard limits, it may be possible to use a control strategy to disconnect and isolate some loads while charging, according to examples disclosed herein. The disclosure herein describes a configurable load connection in the vehicle, e.g. the traction system, during charging to reduce capacitance between the vehicle and the battery.

The present disclosure increases the compatibility of the vehicle with the charging station.

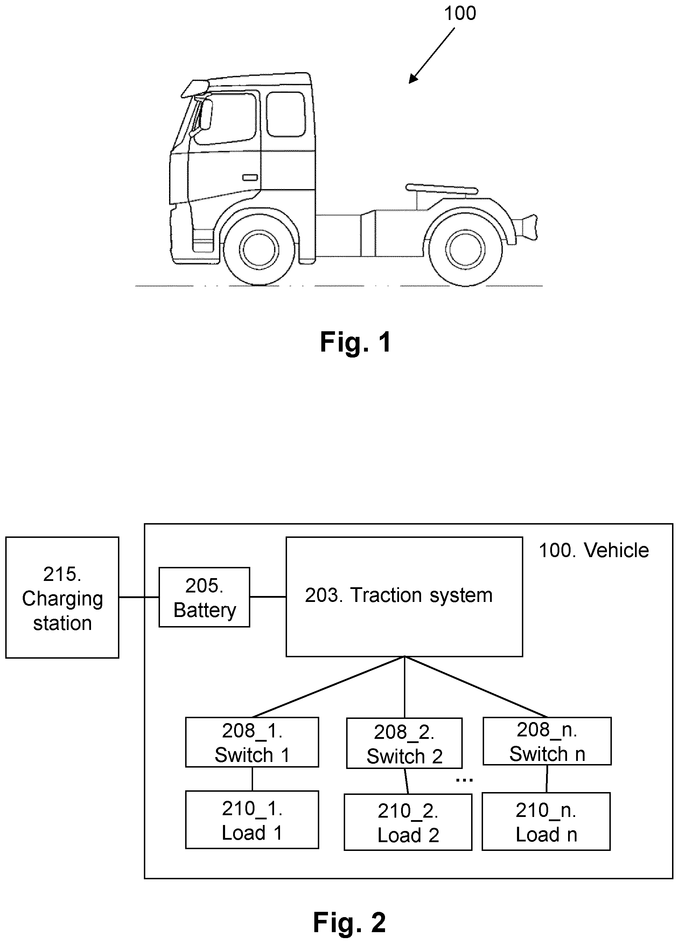

**FIG. 1** is an exemplary drawing illustrating a vehicle **100**, according to an example. The vehicle **100** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** may be a truck for towing one or more trailers . It shall however be understood that the vehicle may be any other type of vehicle, such as another type of truck, a bus, a passenger car, and construction equipment, such as an excavator, a wheel loader, etc. The vehicle **100** may be operated by a user or it may be at least partly automatically driven, i.e., it may be a vehicle comprising autonomous driving capabilities. The vehicle 100 may be a fully electric vehicle or a hybrid vehicle. Using other words, the vehicle **100** may be an at least partly electrically driven vehicle. As such, the vehicle **100** may comprise at least one of: at least one electric motor and generator and at least one internal combustion engine for driving the vehicle **100.**

The vehicle **100** may operate at any suitable voltage, for example in the range of 400-800V, above 1000V, just to mention some examples. The vehicle **100** may be arranged to operate at high voltages. The vehicle **100** may be a high voltage vehicle. High voltage may be for example above 400V or any other suitable voltage.

The term vehicle will be used herein when referring to any of the above types of vehicles.

Since the vehicle **100** is an at least partly electrically driven vehicle, it is arranged to be charged with electric power. The charging may be done at a charging station. The charging may be done via a charging connection between the vehicle **100** and the charging station. The charging connection may be a wired charging cable or a wireless charging link.

**FIG. 2** is an exemplary drawing illustrating the vehicle **100,** according to an example. As seen in **FIG. 2****,** the vehicle **100** comprises a traction system **203.** The traction system **203** may be a high power traction system. The traction system may be a Traction Voltage System (TVS). The traction system **203** may be a High Voltage TVS (HV TVS). The traction system **203** is arranged to provide power from a battery **205** to the motor driving the vehicle **100,** i.e. the traction motor.

The battery **205** may be any suitable battery arranged for storing energy to be used for powering the vehicle **100.** The battery **205** may be comprised in the traction system **203** or it may be arranged to be connected to the traction system **203.** The battery **205** may be a battery system or it may be comprised in a battery system. The battery **205** may comprise any suitable number of battery cells. The battery **205** may be of any suitable battery type, for example Lithium-Ion battery, solid-state battery, Nickel-Metal Hydride battery, flow battery etc.

The traction system **203** is arranged to be connected to n switches **208_n,** where n is a positive integer. Each switch **208_n** may be arranged to be connected to at least one load **210_n.** There may be one switch **208_n** for each load **210_n**, or there may be one switch **208_n** common for two, three or more loads **210_n.**

The switch **208_n** is arranged to connect and disconnect the load **210_n** from the traction system **203.** The switch **208_**n may connect and disconnect both poles of the load **210_n.** Having the switch **208_n** for connecting and disconnecting both poles of the load 210_n effectively reduces the capacitance, e.g. the Y-capacitance. The connection and disconnection may be described as transitioning between a first state and a second state. The first state may represent a connected state, an on state, a closed state, an active state, a locked state or an enabled state, etc. The second state may represent a disconnected state, an off state, an open state, inactive state or disabled state or isolated state or galvanically separated stated, etc. The switch **208_n** may be of any suitable type. The switch **208_n** may be a relay, a contactor, an opener, a breaker, just to mention some examples. The switch **208_n** may be arranged to be controlled by a control unit, e.g. a processing circuitry or computer system. The control of the switch **208_n** may comprise determining and triggering a state change of the switch **208_n** between the first state and the second state. Triggering the state change may comprise sending instructions from the control unit to the switch **208_n** to change the state.

The Y-capacitance, also referred to as Y-capacitor, mentioned above is a type of capacitance arranged to for example filter out common-mode noise, to suppress electromagnetic interference and radio frequency interference noise. The Y-capacitor may be connected between line and the vehicle's chassis. If a Y-capacitor short circuits, it may create a risk for electric shock.

The load **210_n** may be a high power load or a low power load arranged to be connected to the traction system **203** . The load **210_n** may be a high voltage load or a low voltage load connected to the traction system **203.** The load **210_n** may be comprised in the vehicle **100** or arranged to be connected to the vehicle **100.** The number of switches **208_n** may be the same as the number of loads **210_n**, or the number of switches **208_n** may be lower than the number of loads **210_n**. The load **210_n** may be for example a propulsion machine, a break resistance system, a Power Take Off (PTO) system etc. The load **210_n** have a high or low capacitance. The load **210_n** may have a high or low Y-capacitance. When the vehicle **100** comprises multiple loads **210_n**, it may comprise only high power loads, or a combination of high power and low power loads.

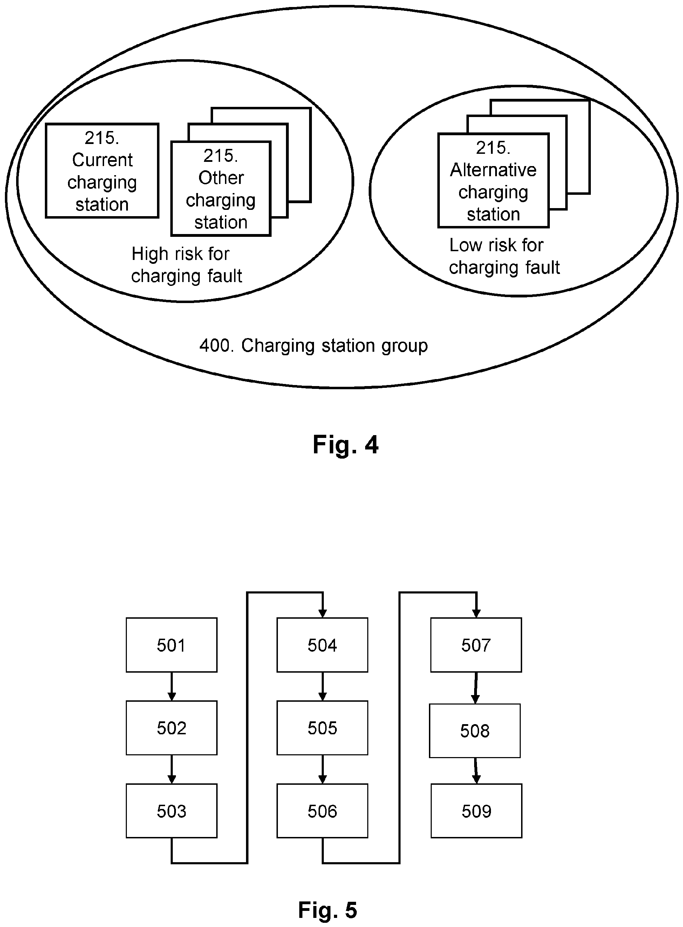

The vehicle **100** is arranged to be connected to a charging station **215** when being charged. As mentioned earlier, the connection between the vehicle **100** and the charging station **215** may be wired or wireless, or a combination of wired and wireless. The charging station **215** may be a current charging station **215** at which the vehicle **100** is currently being charged or is currently intended to be charged. The charging station **215** may be another charging station **215** or an alternative charging station **215,** which will be described in more detail later with reference to, for example **FIG. 4****.** The charging station **215** may be an Electric Vehicle Supply Equipment (EVSE). The charging station **215** may be any suitable charging station for charging the vehicle **100.** The charging station **215** may be a DC charging station.

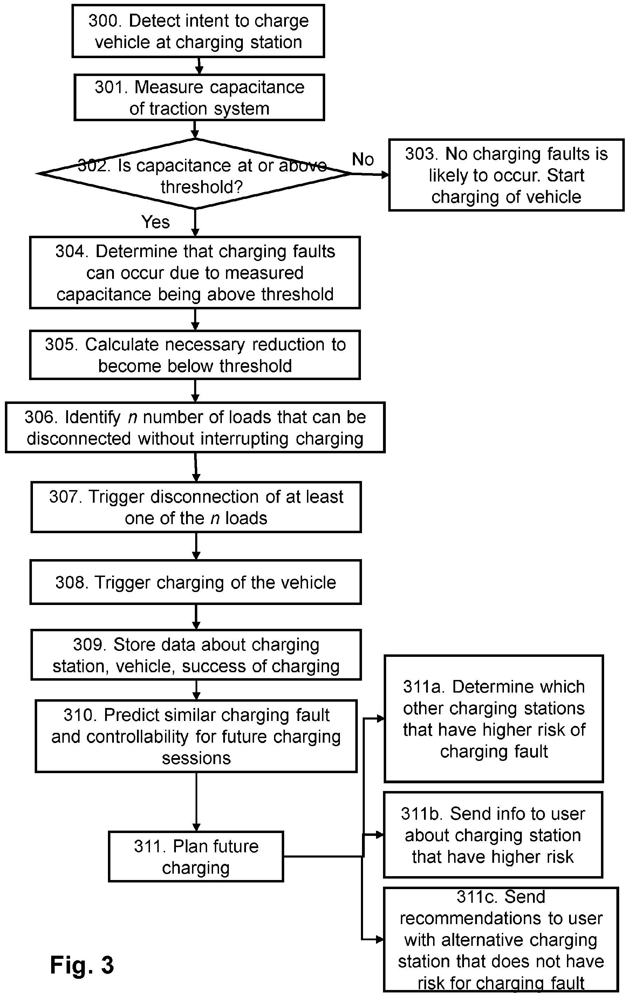

**FIG. 3** is a flow chart of a method, according to an example. The method may be performed by a processing circuitry **802** of a computer system **800.** The computer system **800** may be at least partly comprised in a control unit or it may be a control unit. The method comprises at least one of the following steps, which steps may be performed in any suitable order than described below.

Step **300**: An intent to charge the vehicle **100** is detected. The intent to charge may be detected when charging plug is connected to the charging inlet comprised in the vehicle 100.

Step **301:** The capacitance of the traction system **203** is measured. The capacitance may be measured by using any suitable method, for example a RC method or pulse injection method in a relevant circuit where the capacitance is present in the traction system **203**. The measured capacitance may be Y-capacitance.

Step **302:** The capacitance from step **301** is compared with a capacitance threshold. The result of the comparison is that the capacitance is either at or above the capacitance threshold, or that it is below the capacitance threshold. The capacitance threshold may be a Y-capacitance threshold.

Step **303:** This step is performed if a result of the comparison is that the capacitance from step **301** is below the capacitance threshold. When the capacitance is below the capacitance threshold, it may be determined that no charging faults may occur or that the likelihood of charging fault is below a likelihood threshold . Consequently, charging of the vehicle **100** may be started. A charging fault may be a malfunction that prevents the vehicle **100** from charging properly, e.g. **charging** according to the intent. The charging fault may be vehicle related, charging station related or user related. A charging fault which is vehicle related may be related to for example problems with the battery **205,** the onboard charger, software errors, a load **210_n**, capacitance issues, etc., just to mention some examples.

Step **304:** This step is performed if a result of the comparison is that the capacitance from step **301** is at or above the capacitance threshold. When the capacitance is at or above the capacitance threshold, it may be determined that a charging fault may occur. For example, the charging station might see this as it cannot effectively do isolation monitoring and hence, it will report it as an error and stop charging.

Step **305:** The necessary reduction in capacitance to become below the capacitance threshold may be determined.

Step **306:** The number of loads **210_n** that may be disconnected without interrupting the charging of the vehicle **100** may be determined. This may be in the form of an information available to the processing circuitry by checking which loads **210_n** are requested to operate during charging. So all the non-operated load **210_n** is available for disconnection. The number of non-operated load **210_n** may be m, where m is zero or higher. In addition to determining the number of loads **210_n**, it may be determined which loads **210_n** amongst a plurality of loads **210_n** that may be disconnected without interrupting the charging of the vehicle **100**. When the vehicle **100** comprises a combination of high power loads and low power loads, it may be determined to disconnect at least one of the high power load while maintaining the low power loads connected. Interrupting the charging of the vehicle **100** may comprise to stop the current charging of the vehicle **100** either temporarily and to be resumed at a later time when the charging fault has been corrected or when a timer has expired, or the charging may be stopped and not resumed for this particular vehicle **100** at the current charging station **214.**

Step **307:** Disconnection of the m loads **210_n** determined in step **306**, may be triggered. The triggering may comprise sending instructions to at least one switch **208_n** associated with the relevant load **210_n** which disconnects the load **210_n**.

Step **308:** The charging of the vehicle **100** may be triggered when the disconnection in step **307** has been completed. Triggering the charging may comprise sending instructions to the current charging station **215** to start providing charge to the battery **205**.

Step **309:** Data may be stored. The data may comprise information indicating the current charging station **215**, the vehicle **100**, the success of charging etc. Success of the charging may indicate to what degree the intended charging was fulfilled. The data may be stored in an onboard or offboard data storage.

Step **310:** Similar charging faults, e.g. similar capacitance issues, and controllability of these charging faults for future charging sessions may be determined by using the statistical data collected in server on different charging stations. Determining the similar charging faults and controllability of them for future charging sessions may be referred to as predicting similar charging faults and controllability of them for future charging sessions. The charging fault may be associated with charging capacitance issues, i.e. the capacitance being at or above a capacitance threshold, i.e. a high risk of charging capacitance. Determining the similar charging faults may comprise which charging stations **215** that this may occur or that have a likelihood that it may occur.

Step **311**: Future charging of the vehicle **100** may be planned, e.g. future charging may be determined or predicted. Planning the future charging may comprise one, two or three of the substeps **311a**, **311b** and **311c**. The future charging may be planned based on information indicating a future mission for the vehicle **100.**

Step **311a**: This may be standalone step or a substep of step **311.** It may be determined or predicted which other charging stations **215** that has higher risk for a charging fault from the statistical data gathered by server. This may be in order to avoid future charging at other charging stations **215** that have higher risk for charging fault.

Step **311b:** This may be standalone step or a substep of step **311.** Information indicating that a charging station has a higher risk of a charging fault may be provided to a user of the vehicle **100**. The selected charging station may be one of the other charging stations **215** determined in step **311a.**

Step **311c**: Information indicating recommendations for at least one alternative charging station **215** that does not have a risk for charging fault or that has a risk below a risk threshold, may be provided to the user.

One of the steps **311a**, **311b** and **311c** may be performed, two of them may be performed or all three may be performed. The substeps may be performed in any suitable order or at the same time.

**FIG. 4** is an exemplary drawing illustrating a charging station group **400**, according to an example. The charging station group **400** may comprise any number of charging stations **215**. The charging station group **400** may comprise charging stations **215** with high risk for a charging fault, seen to the left in **FIG. 4****,** and charging stations **215** with low risk for charging faults, seen to the right in **FIG. 4**. The charging station **215** with high risk for charging fault comprises the current charging station **215** and at least one other charging station **215.** The charging station with low risk for charging fault comprises at least one alternative charging station **215**. The charging station **215** with a high risk for charging fault has a risk which is at or above a risk threshold. The charging station **215** with a low risk for charging fault has a risk which is below the risk threshold. The risk for charging fault may be described as a risk for charging capacitance issues, or the risk for charging fault may be caused by or comprising a risk for charging capacitance issues.

**FIG. 5** is a flow chart of a method, according to an example. The method may be performed by a processing circuitry **802** of a computer system **800.** The computer system **700** may be at least partly comprised in a control unit or it may be a control unit. The method comprises at least one of the following steps, which steps may be performed in any suitable order than described below.

Step **501:** This step corresponds to steps **300, 301, 302, 303** and **304** in **FIG. 3****.** Determine or predict charging faults due to high capacitance affecting the traction system 203. It may be the insulation resistance monitoring in the traction system **203** that may be affected by the high capacitance, e.g. capacitance above a capacitance threshold.

Step **502:** This step corresponds to step **305** in **FIG. 3****.** Calculate how much reduction in the capacitance of the traction system **203** is needed to enable charging or to perform charging with a low risk of charging fault.

Step **503**: This step corresponds to step **306** in **FIG. 3****.** Determine or identify loads **210_n** that can be disconnected from the traction system **2023** without interruption to the charging, this can be done by processing unit by checking which loads **210_n** are requested to be active during a charging session of the vehicle **100** and other necessary functions. Other functions can include for example cooling of active components, use of PTO loads, Air conditioning for the user cabin on vehicle etc. The identified loads **210_n** may be high power loads, low power loads, high voltage loads, low voltage loads, or any combination of them.

Step **504**: This step corresponds to step **306** in **FIG. 3****.** Prioritize the high power loads **210_n** for disconnection. This means that the low power loads are not disconnected. In other words, prioritize loads **210_n** of a first type for disconnection, and do not disconnect loads of a second type.

Step **505**: This step corresponds to step **307** in **FIG. 3****.** Determine to disconnect the selected high power loads **210_n** in step **504,** trigger disconnection and trigger start of the charging of the vehicle **100.**

Step **506:** This step corresponds to step **309** in **FIG. 3****.** Store at least one of the following analysis data: Charging station characteristics, charging type, vehicle conditions, etc. plus the success of the method in reducing the capacitance. The analysis data may be stored in an onboard memory, in an offboard memory or in both an offboard memory and an onboard memory.

Step **507:** This step corresponds to step **310** in **FIG. 3****.** Train a classifier to predict similar charging faults and controllability of it for future charging sessions based on the vehicle condition and the targeted charging station and charging protocol.

Step **508:** This step corresponds to step **311** in **FIG. 3****.** Use this information in the vehicle charging planner to predict what charging stations **215** will have a higher risk of charging fault, as compared to the other charging stations **215**.

Step **509:** This step corresponds to steps **311a, 311b, 311c** in **FIG. 3****.** Provide warning and alternative charging options to the vehicle's user if the selected charging station **215** in a trip has a high risk of charging fault.

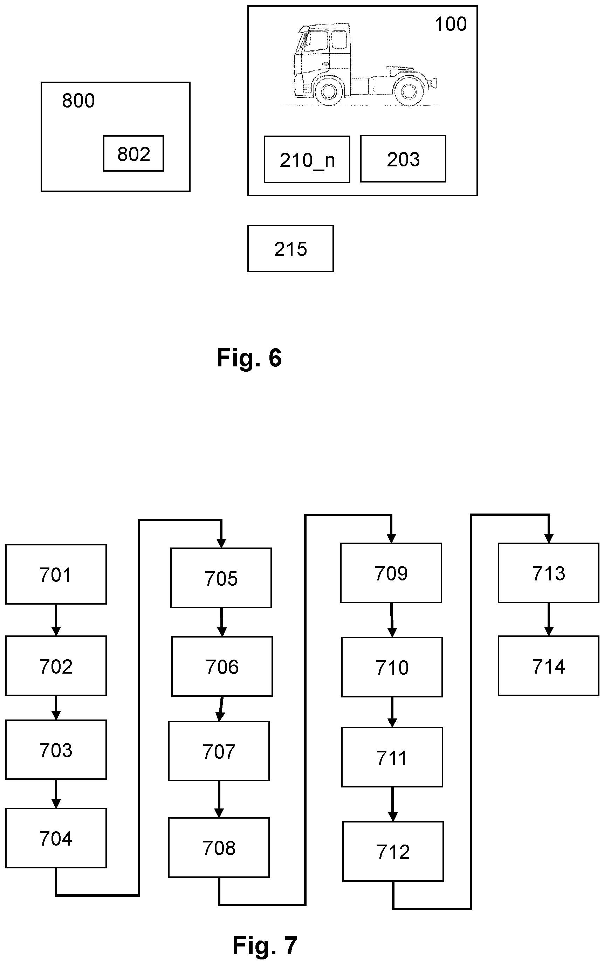

**FIG. 6** is another view of **FIG. 1****,** according to an example. **FIG. 6** illustrates a computer system **800** for handling charging of a vehicle **100.** At least one high power load **210_n** is connected to the vehicle **100.**

The computer system **800** comprises processing circuitry **802** configured to determine an intent to charge the vehicle **100** at a current charging station **215.** Determining the intent to charge may be described as detecting the intent to charge.

The processing circuitry **802** is configured to, triggered by the determined intent to charge, obtain information indicating a capacitance of a traction system **203** comprised in the vehicle **100**, e.g. information indicating a measured capacitance. The information may be obtained from a sensor arranged to measure the capacitance. The capacitance may be Y-capacitance. The traction system **203** may be a high power traction system or a high volage traction system.

The processing circuitry **802** is configured to determine that a charging fault can occur due to the measured capacitance being above a capacitance threshold.

The processing circuitry **802** is configured to determine an amount of reduction in the capacitance of the traction system **203** that is needed for it to become below the capacitance threshold.

The processing circuitry **802** is configured to determine n high power loads **210_n** that can be disconnected from the traction system **203** without interrupting the charging of the vehicle **100** at the current charging station **215** or without interrupting the charging of the vehicle **100** for more than a certain time. n is a positive integer. Determining the n high power loads **210_n** may be described as identifying the n high power loads **210_n.**

The processing circuitry **802** is configured to initiate disconnection of at least one of the n high power loads **210_n.** Initiating the disconnection of at least one of the n high power loads **210_n** may comprise disconnection information provided to a switch **208_n** associated with the at least one high power load **210_n**. Consequently, the switch **208_n** changes its state from on to off such that the high power load **201_n** is disconnected.

The processing circuitry **802** is configured to initiate charging of the vehicle **100** at the current charging station **215** after the disconnection has been completed. Initiating the charging may comprise providing information to a user that charging may be started and the user consequently connects the charging cord between the vehicle **100** and the charging station **215** and activates the charging session.

The processing circuitry **802** may be further configured to obtain analysis data related to at least one of: the current charging station **215**, the vehicle **100** and success of the charging of the vehicle **100** after the disconnection. Success of the charging may indicate to what degree the intended charging was fulfilled.

The processing circuitry **802** may be configured to determine, based on the analysis data, a similar or same charging fault that can occur for a future charging session of the vehicle **100** at the current charging station **215**.

The processing circuitry **802** may be configured to determine the future charging session of the vehicle **100** based on the determined similar or same charging fault. The future charging session comprises the current charging station **215** or at least one other charging station **215**.

The processing circuitry **802** may be configured to determine, from a charging station group, at least one other charging station **215** having a risk for charging fault that is at or above a risk threshold to not be a candidate for a future charging session of the vehicle **100**.

The processing circuitry **802** may be configured to wherein the at least one other charging station **215** is determined based on information indicating the similar or same charging fault for the future charging session of the vehicle **100** at the current charging station **215.**

The processing circuitry **802** may be configured to determine to not use at least one of the determined at least one other charging station **215** for the future charging session of the vehicle **100.**

The processing circuitry **802** may be configured to determine an alternative charging station **215** from the charging station group **400** to be used instead of the determined at least one other charging station **215** in the future charging session of the vehicle **100**. The alternative charging station **215** has a risk of charging fault that is below the risk threshold.

The processing circuitry **802** may be configured to initiate guidance of the vehicle 100 to the alternative charging station **215.**

Charging of the vehicle **100** at the current charging station **215** may be enabled when the capacitance is below the capacitance threshold.

The vehicle **100** comprises the computer system **800.**

**FIG. 7** is a flow chart of a method for handling charging of a vehicle **100** according to an example. The method is a computer implemented method. A technical benefit of the method illustrated in **FIG. 7** may include that handling of charging of a vehicle is improved. When the charging of the vehicle is initiated after disconnection of at least one of the n HV loads has been completed, the capacitance between the vehicle and the charging station has been reduced. High capacitance between the vehicle and the charging station may cause charging failure, and the risk for charging failure is reduced when the capacitance has been reduced. The reduced risk for charging failure also reduces downtime for a vehicle spent charging, it reduces maintenance costs since there are less failures etc. The improved handling of charging enhances the user experience of the charging. Reduced capacitance and thereby reduced risk for failures also increase the safety. The method comprises at least one of the following steps, which steps may be performed in any suitable order than described below:
Step **701:** This step corresponds to step **300** in **FIG. 3** and step **501** in **FIG. 5****.** The processing circuitry **802** of a computer system **800** determines an intent to charge the vehicle **100** at a current charging station **215**. Determining the intent to charge may be described as detecting an intent to charge.
Step **702:** This step corresponds to step **301** in **FIG. 3** and step **502** in **FIG. 5****.** Triggered by the detected intent to charge, the processing circuitry 802 obtains information indicating a capacitance of a traction system **203** comprised in the vehicle **100**, e.g. information indicating a measured capacitance. The information may be obtained from a sensor arranged to measure the capacitance. The capacitance may be Y-capacitance. The traction system **203** may be a high power traction system or a high voltage traction system.
Step **703:** This step corresponds to steps **302** and **304** in **FIG. 3** and step **503** in **FIG. 5****.** The processing circuitry **802** determines that a charging fault can occur due to the measured capacitance being above a capacitance threshold.
Step **704:** This step corresponds to step **305** in **FIG.** 3 and step **504** in **FIG. 5****.** The processing circuitry **802** determines an amount of reduction in the capacitance of the traction system 203 that is needed for it to become below the capacitance threshold. Charging of the vehicle **100** at the current charging station **215** may be enabled when the capacitance is below the capacitance threshold.
Step **705:** This step corresponds to step **306** in **FIG. 3** and step **505** in **FIG. 5****.** The processing circuitry **802** determines n HV loads **210_n** that can be disconnected from the traction system **203** without interrupting the charging of the vehicle **100** at the current charging station **215**, or without interrupting the charging of the vehicle **100** for more than a certain time. n is a positive integer. Determining the n high power loads **210_n** may be described as identifying the high power loads **210_n.**
Steo **706:** This step corresponds to step **307** in **FIG. 3** and step **506** in **FIG. 5****.** The processing circuitry 802 initiates disconnection of at least one of the n high power loads 210_n. Initiating the disconnection of at least one of the n high power loads **210_n** may comprise disconnection information provided to a switch **208_n** associated with the at least one high power load **210_n**. Consequently, the switch **208_n** changes its state from on to off such that the high power load **201_n** is disconnected.

Initiating the disconnection of at least one of the n high power loads **210_n** may comprise disconnection information provided to a switch **208_n** associated with the at least one high power load **210_n**.

Step 707: This step corresponds to step **308** in **FIG. 3** and step **507** in **FIG. 5****.** The processing circuitry **802** initiates charging of the vehicle **100** at the current charging station **215** after the disconnection has been completed. Initiating the charging may comprise providing information to a user that charging may be started and the user consequently connects the charging cord between the vehicle **100** and the charging station **215** and activates the charging session.

Step **708:** This step corresponds to step **309** in **FIG. 3****.** The processing circuitry 802 may obtain analysis data related to at least one of: the current charging station **215,** the vehicle **100** and success of the charging of the vehicle **100** after the disconnection. Success of the charging may indicate to what degree the intended charging was fulfilled.

Step **709:** This step corresponds to step **310** in **FIG. 3****.** The processing circuitry 802 may determine, based on the analysis data, a similar or same charging fault that can occur for a future charging session of the vehicle 100 at the current charging station **215.**

Step **710:** The processing circuitry **802** may determine the future charging session of the vehicle **100** based on the determined similar or same charging fault. The future charging session may comprise the current charging station **215** or at least one other charging station **215**.

Step **711**: The processing circuitry **802** may determine, from a charging station group, at least one other charging station **215** having a risk for charging fault that is at or above a risk threshold to not be a candidate for a future charging session of the vehicle **100.** The at least one other charging station **215** is determined based on information indicating the similar or same charging fault for the future charging session of the vehicle **100** at the current charging station **215**.

Step **712:** The processing circuitry **802** may determine to not use at least one of the determined at least one other charging station **215** for the future charging session of the vehicle 100. In other words, the processing circuitry **802** may refrain from using the at least one other charging station **215** for future charging session, for example because the at least one charging station **215** has a risk for charging fault that is at or above the risk threshold.

Step **713:** The processing circuitry **802** may determine an alternative charging station **215** from the charging station group **400** to be used instead of the determined at least one other charging station **215** in the future charging session of the vehicle **100.** The alternative charging station **215** has a risk of charging fault that is below the risk threshold.

Step **714:** The processing circuitry **802** may initiate guidance of the vehicle **100** to the alternative charging station **215.**

A computer program product comprising program code for performing, when executed by a processing circuitry **802,** the method described herein.

A non-transitory computer-readable storage medium comprising instructions, which when executed by a processing circuitry **802,** cause a processing circuitry **802** to perform the method described herein.

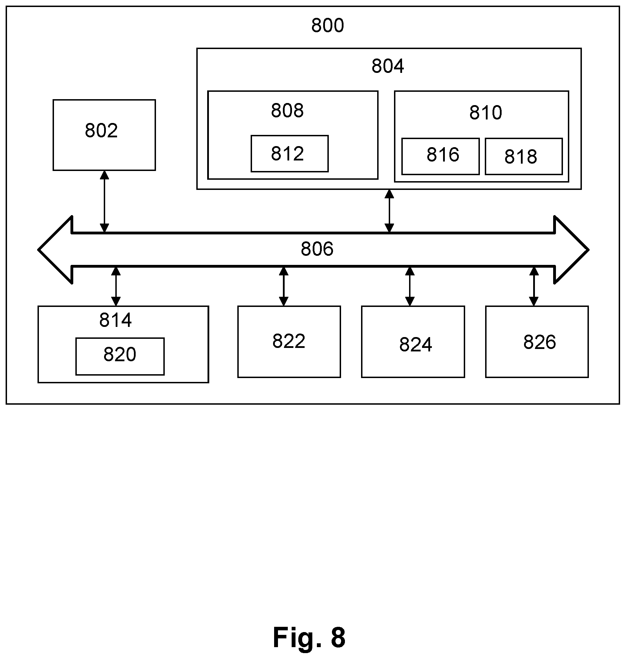

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804**, and a system bus **806**. The computer system **800** may include at least one computing device having the processing circuitry **802**. The system bus **806** provides an interface for system components including, but not limited to, the memory **804** and the processing circuitry **802.** The processing circuitry **802** may include any number of hardware components for conducting data or signal processing or for executing computer code stored in memory **804**. The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810**, which may include an operating system **816** and/or one or more program modules **818**. All or a portion of the examples disclosed herein may be implemented as a computer program **820** stored on a transitory or non-transitory computer-usable or computer-readable storage medium (e.g., single medium or multiple media), such as the storage device **814**, which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802**. In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802**. The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device
interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of examples 1-21. Each example can be combined with any of the other examples discussed above.

**Example 1:** A computer system **800** for handling charging of a vehicle **100**, wherein at least one high power load **210_n** is connected to the vehicle **100**, the computer system **800** comprising processing circuitry **802** configured to:
- determine an intent to charge the vehicle **100** at a current charging station **215**:
- triggered by the determined intent to charge, obtain information indicating a capacitance of a traction system **203** comprised in the vehicle **100**;
- determine that a charging fault can occur due to the capacitance being above a capacitance threshold;
- determine an amount of reduction in the capacitance of the traction system **203** that is needed for it to become below the capacitance threshold;
- determine n high power loads **210_n** that can be disconnected from the traction system **203** without interrupting the charging of the vehicle **100** at the current charging station **215**, where n is a positive integer; initiate disconnection of at least one of the n high power loads **210_n**; and to
- initiate charging of the vehicle **100** at the current charging station **215** after the disconnection has been completed.

**Example 2:** The computer system **800** of example 1, wherein the processing circuitry **802** is further configured to:
- obtain analysis data related to at least one of: the current charging station **215**, the vehicle **100** and success of the charging of the vehicle 100 after the disconnection; and to
- determine, based on the analysis data, a similar or same charging fault that can occur for a future charging session of the vehicle **100** at the current charging station **215**.

**Example 3**: The computer system **800** of any of examples 1-2, wherein the processing circuitry **802** is further configured to:
- determine the future charging session of the vehicle **100** based on the determined similar or same charging fault, wherein the future charging session comprises the current charging station **215** or at least one other charging station **215.**

**Example 4**: The computer system **800** of any of examples 1-3, wherein the processing circuitry **802** is further configured to:
- determine, from a charging station group, at least one other charging station **215** having a risk for charging fault that is at or above a risk threshold to not be a candidate for a future charging session of the vehicle **100**,
   wherein the at least one other charging station **215** is determined based on information indicating the similar or same charging fault for the future charging session of the vehicle **100** at the current charging station **215**.

**Example 5:** The computer system **800** of example 4, wherein the processing circuitry 802 is further configured to:
- determine to not use at least one of the determined at least one other charging station **215** for the future charging session of the vehicle **100**.

**Example 6**: The computer system **800** of any of examples 4-5, wherein the processing circuitry **802** is further configured to:
- determine an alternative charging station **215** from the charging station group **400** to be used instead of the determined at least one other charging station **215** in the future charging session of the vehicle **100**, wherein the alternative charging station **215** has a risk for charging fault that is below the risk threshold.

**Example 7:** The computer system **800** of example 6, wherein the processing circuitry 802 is further configured to:
- initiate guidance of the vehicle **100** to the alternative charging station **215**.

**Example 8**: The computer system **800** of any of the preceding examples, wherein charging of the vehicle **100** at the current charging station **215** is enabled when the capacitance is below the capacitance threshold.

**Example 9**: The computer system **800** of any of the preceding examples, wherein initiating the disconnection of at least one of the n high power loads **210_n** comprises disconnection information provided to a switch **208_n** associated with the at least one high power load **210_n.**

**Example 10:** A vehicle **100** comprising the computer system **800** of any of examples 1-9.

**Example 11**: A computer-implemented method for handling charging of a vehicle **100**, wherein at least one high power load **210_n** is connected to the vehicle **100**, the method comprising:
- *determining* **300, 501, 701,** by processing circuitry **802** of a computer system 800, an intent to charge the vehicle **100** at a current charging station **215**;
- triggered by the determined intent to charge, *obtaining* **401, 502, 702,** by the processing circuitry **802,** information indicating a capacitance of a traction system **203** comprised in the vehicle **100;**
- *determining* **302, 304, 503, 703,** by the processing circuitry **802,** that a charging fault can occur due to the capacitance being above a capacitance threshold; *determining* **305, 504, 704,** by the processing circuitry **802,** an amount of reduction in the capacitance of the traction system **203** that is needed for it to become below the capacitance threshold;
- *determining* **306, 505, 705,** by the processing circuitry **802**, n high power loads **210_n** that can be disconnected from the traction system **203** without interrupting the charging of the vehicle **100** at the current charging station **215**, where n is a positive integer; *initiating* **307, 506, 706,** by the processing circuitry **802**, disconnection of at least one of the n high power loads **210_n**; and
- *initiating* **308, 507, 707,** by the processing circuitry **802**, charging of the vehicle **100** at the current charging station **215** after the disconnection has been completed.

**Example 12**: The method of example 11, further comprising:
- *obtaining* **309, 708**, by the processing circuitry **802**, analysis data related to at least one of: the current charging station **215**, the vehicle **100** and success of the charging of the vehicle **100)**after the disconnection; and
- *determining* **310, 709**, by the processing circuitry **802**, based on the analysis data, a similar or same charging fault that can occur for a future charging session of the vehicle **100** at the current charging station **215**.

**Example 13**: The method of any of examples 11-12, further comprising:
- *determining* **710**, by the processing circuitry **802**, the future charging session of the vehicle **100** based on the determined similar or same charging fault, wherein the future charging session comprises the current charging station **215** or at least one other charging station **215**.

**Example 14**: The method of any of examples 11-13, further comprising:
- *determining* **711**, by the processing circuitry **802**, from a charging station group, at least one other charging station **215** having a risk for charging fault that is at or above a risk threshold to not be a candidate for a future charging session of the vehicle **100**, wherein the at least one other charging station **215** is determined based on information indicating the similar or same charging fault for the future charging session of the vehicle **100** at the current charging station **215)**.

**Example 15**: The method of example 14, further comprising:
- *determining* **712,** by the processing circuitry **802**, to not use at least one of the determined at least one other charging station **215** for the future charging session of the vehicle **100.**

**Example 16**: The method of any of examples 14-15, further comprising:
- *determining* **713**, by the processing circuitry **802**, an alternative charging station **215** from the charging station group **400** to be used instead of the determined at least one other charging station **215** in the future charging session of the vehicle **100**, wherein the alternative charging station **215** has a risk for charging fault that is below the risk threshold.

**Example 17**: The method of example 16, further comprising:
- *initiating* **714,** by the processing circuitry **802**, guidance of the vehicle **100** to the alternative charging station **215.**

**Example 18**: The method of any of examples 11-17, wherein charging of the vehicle **100** at the current charging station **215** is enabled when the capacitance is below the capacitance threshold.

**Example 19:** The method of any of examples 11-18, wherein initiating the disconnection of at least one of the n high power loads **210_n** comprises disconnection information provided to a switch **208_n** associated with the at least one high power load **210_n**.

**Example 20**. A computer program product comprising program code for performing, when executed by a processing circuitry **802**, the method of any of examples 11-19.

**Example 21**. A non-transitory computer-readable storage medium comprising instructions, which when executed by a processing circuitry **802**, cause a processing circuitry 802 to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) for handling charging of a vehicle (100), wherein at least one high power load (210_n) is connected to the vehicle (100), the computer system (800) comprising processing circuitry (802) configured to:
determine an intent to charge the vehicle (100) at a current charging station (215):
triggered by the determined intent to charge, obtain information indicating a capacitance of a traction system (203) comprised in the vehicle (100);
determine that a charging fault can occur due to the capacitance being above a capacitance threshold;
determine an amount of reduction in the capacitance of the traction system (203) that is needed for it to become below the capacitance threshold;
determine n high power loads (210_n) that can be disconnected from the traction system (203) without interrupting the charging of the vehicle (100) at the current charging station (215), where n is a positive integer;
initiate disconnection of at least one of the n high power loads (210_n); and to
initiate charging of the vehicle (100) at the current charging station (215) after the disconnection has been completed.

2. The computer system (800) of claim 1, wherein the processing circuitry (802) is further configured to:
obtain analysis data related to at least one of: the current charging station (215), the vehicle (100) and success of the charging of the vehicle (100) after the disconnection; and to
determine, based on the analysis data, a similar or same charging fault that can occur for a future charging session of the vehicle (100) at the current charging station (215).

3. The computer system (800) of any of claims 1-2, wherein the processing circuitry (802) is further configured to:
determine the future charging session of the vehicle (100) based on the determined similar or same charging fault, wherein the future charging session comprises the current charging station (215) or at least one other charging station (215).

4. The computer system (800) of any of claims 1-3, wherein the processing circuitry (802) is further configured to:
determine, from a charging station group, at least one other charging station (215) having a risk for charging fault that is at or above a risk threshold to not be a candidate for a future charging session of the vehicle (100),
wherein the at least one other charging station (215) is determined based on information indicating the similar or same charging fault for the future charging session of the vehicle (100) at the current charging station (215).

5. The computer system (800) of claim 4, wherein the processing circuitry (802) is further configured to:
determine to not use at least one of the determined at least one other charging station (215) for the future charging session of the vehicle (100).

6. The computer system (800) of any of claims 4-5, wherein the processing circuitry (802) is further configured to:
determine an alternative charging station (215) from the charging station group (400) to be used instead of the determined at least one other charging station (215) in the future charging session of the vehicle (100), wherein the alternative charging station (215) has a risk for charging fault that is below the risk threshold.

7. The computer system (800) of claim 6, wherein the processing circuitry (802) is further configured to:
initiate guidance of the vehicle (100) to the alternative charging station (215).

8. The computer system (800) of any of the preceding claims, wherein charging of the vehicle (100) at the current charging station (215) is enabled when the capacitance is below the capacitance threshold.

9. The computer system (800) of any of the preceding claims, wherein initiating the disconnection of at least one of the n high power loads (210_n) comprises disconnection information provided to a switch (208_n) associated with the at least one high power load (2 1 0_n).

10. A vehicle (100) comprising the computer system (800) of any of claims 1-9.

11. A computer-implemented method for handling charging of a vehicle (100), wherein at least one high power load (210_n) is connected to the vehicle (100), the method comprising:
*determining* (300, 501, 701), by processing circuitry (802) of a computer system (800), an intent to charge the vehicle (100) at a current charging station (215):
triggered by the detected intent to charge, *obtaining* (401, 502, 702), by the processing circuitry (802), information indicating a capacitance of a traction system (203) comprised in the vehicle (100);
*determining* (302, 304, 503, 703), by the processing circuitry (802), that a charging fault can occur due to the capacitance being above a capacitance threshold;
*determining* (305, 504, 704), by the processing circuitry (802), an amount of reduction in the capacitance of the traction system (203) that is needed for it to become below the capacitance threshold;
*determining* (306, 505, 705), by the processing circuitry (802), n high power loads (210_n) that can be disconnected from the traction system (203) without interrupting the charging of the vehicle (100) at the current charging station (215), where n is a positive integer;
*initiating* (307, 506, 706), by the processing circuitry (802), disconnection of at least one of the n HV loads (210_n); and
*initiating* (308, 507, 707), by the processing circuitry (802), charging of the vehicle (100) at the current charging station (215) after the disconnection has been completed.

12. The method of claim 11, further comprising:
*obtaining* (309, 708), by the processing circuitry (802), analysis data related to at least one of: the current charging station (215), the vehicle (100) and success of the charging of the vehicle (100) after the disconnection; and
*determining* (310, 709), by the processing circuitry (802), based on the analysis data, a similar or same charging fault that can occur for a future charging session of the vehicle (100) at the current charging station (215).

13. The method of any of claims 11-12, further comprising:
*determining* (710) the future charging session of the vehicle (100) based on the determined similar or same charging fault, wherein the future charging session comprises the current charging station (215) or at least one other charging station (215).

14. A computer program product comprising program code for performing, when executed by a processing circuitry (802), the method of any of claims 11-13.

15. A non-transitory computer-readable storage medium comprising instructions, which when executed by a processing circuitry (802), cause the processing circuitry (802) to perform the method of any of claims 11-13.
